(19) Europäisches Patentamt
European Patent Office
Office européen des brevets

(11) **EP 3 678 520 B1**

(12) **EUROPEAN PATENT SPECIFICATION**

(45) Date of publication and mention
of the grant of the patent:
**30.08.2023   Bulletin 2023/35**

(21) Application number: **19837716.0**

(22) Date of filing: **09.07.2019**

(51) International Patent Classification (IPC):
*A47J 31/18* (2006.01)        *A47J 31/52* (2006.01)

(52) Cooperative Patent Classification (CPC):
**A47J 31/525; A47J 31/18**

(86) International application number:
**PCT/TR2019/050547**

(87) International publication number:
**WO 2020/018057 (23.01.2020 Gazette 2020/04)**

(54) **TURKISH COFFEE BREWING METHOD WITH CAPACITIVE SENSOR AND THE MACHINE THEREOF**

BRÜHVERFAHREN FÜR TÜRKISCHEN KAFFEE MIT KAPAZITIVEM SENSOR UND MASCHINE DAFÜR

PROCÉDÉ D'INFUSION DE CAFÉ TURC FAISANT INTERVENIR UN CAPTEUR CAPACITIF ET MACHINE ASSOCIÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.07.2018   TR 201810055**
**06.08.2018   TR 201811317**
**13.09.2018   TR 201813175**
**03.07.2019   TR 201909936**

(43) Date of publication of application:
**15.07.2020   Bulletin 2020/29**

(73) Proprietor: **Smarte Teknoloji Ve Enerji San. Tic. A.S.**
**34467 Sariyer/Istanbul (TR)**

(72) Inventor: **BALLIKAYA, Melih**
**34467 Sariyer/Istanbul (TR)**

(74) Representative: **Sevinç, Erkan**
**Istanbul Patent A.S.**
**Plaza-33, Büyükdere Cad. No: 33/16**
**Sisli**
**34381 Istanbul (TR)**

(56) References cited:
EP-A1- 2 700 338        WO-A1-2006/008583
WO-A2-2008/068225       WO-A2-2011/002421
WO-A2-2011/002421       DE-U1-202014 008 862
TR-A2- 201 615 850      TR-A2- 201 615 850

## Description

### Technical Field of the Invention

Present invention relates to a Turkish coffee brewing method with capacitive sensor and the machine thereof.

### Background of the Invention

Developing a coffee machine especially designed for preparing a special coffee such as Turkish coffee is a difficult task both technically and economically.

Turkish coffee brewing method disclosed in the patent application TR 2009/04257, senses whether the temperature of the coffee mixture is close to the boiling point by detecting the sharp decrease in the temperature increase rate. Brewing ends when the total energy limit is exceeded, the total energy is proportional with the amount of the coffee mixture. This method controls and detects the temperature of the mixture in the pot so that decides whether the coffee is ready according to the reaction of the coffee mixture to temperature in time. However, it is not possible to determine the brewing point of a mixture consisting of sugar, coffee and water by employing a temperature sensor. Boiling point control is not adequate for Turkish coffee brewing method because Turkish coffee method determines that the coffee is ready by the foam amount in the coffee water mixture. Moreover, calculating the total energy to be transferred and deciding that the coffee is ready when this calculated energy limit is reached is not the right approach since it doesn't consider the amount of the foam in the coffee mixture. Furthermore, the water level is also determined by the change in temperature increase. However, this measurement might change due to the density of the ingredients in the coffee mixture, it is highly possible that this measurement returns misleading results.

Another issue to be mentioned is that the sensors employed in present methods do not work properly due to external factors. As well as every brewing does not end with the same taste and consistency because coffee machine sensors are effected by external factors and parasites, in some cases the brewing also fails. Most present methods in art that employs sensors or sensor clusters, have offered solutions to prevent inaccurate measurements due to external factors. For instance, in coffee machines which employs infrared sensors, it is necessary to prevent any light entrance to the pot interior. Therefore, prior to brewing process, the pot is moved upwards in the chamber with a mechanical system so that space between the pot and the upper part of the chamber is eliminated. However mechanical solutions as such remain inadequate for coffee machines which employs sensors.

TR 2016/15850 A2 discloses a coffee machine and a method for brewing Turkish coffee.

The coffee machine comprises a body, a brewing room located inside the body, a pot which is located inside the brewing room, a heater located underneath the brewing room for heating the pot and a level sensor for sensing the level of the coffee-water mixture inside the pot. The level sensor is located on top of the brewing room for detecting the mixture level.

EP 2 700 338 A1 discloses a coffee machine comprising at least one boiling chamber for receiving a boiling pot; and a water tank comprising a port connectable to an external water supply for filling water in the water tank. The capacitance sensor is also provided for sensing the capacity between heater and sensor. Capacitance sensor is adapted to indicate imminent or actual overflow when sensing an increase in capacity of the vapor or foam.

### Brief Description of Drawings

Figure 1 is a flowchart for Turkish coffee brewing method with a Turkish coffee machine (0)

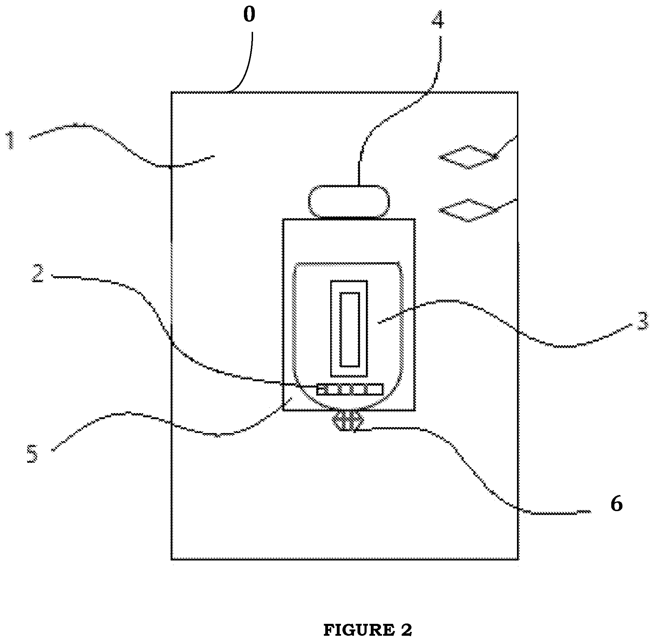

Figure 2 illustrates a Turkish coffee machine (0) of the present invention according to one of the embodiments of the present invention.

### Reference Signs List

0. Turkish coffee machine
1. Machine body
2. Brewing unit
3. Pot
4. At least one capacitive sensor
5. Chamber

---

---

6. Connector

**Detailed Descrition of Invention**

Present invention relates to a Turkish coffee brewing method with Turkish coffee machine (0). Said method comprises the steps set out in appended claim 1.

In another aspect, the present invention relates to a Turkish coffee machine comprising the features set out in appended claim 11.

In a preferred embodiment of the invention, said at least one capacitive sensor (4) comprised by the said Turkish coffee machine (0) detects whether the pot (3) is placed in the chamber (5) or not. Initial coffee water mixture level ($Mix_0$) in the pot (3) is measured by the said at least one capacitive sensor (4).

Measured initial coffee-water mixture level ($Mix_0$) may be transmitted such as for example to a microprocessor. Said transmission may be done by a wireless communication unit or a receiver. Microprocessor calculates the target coffee-water mixture level ($Mix_T$) with initial coffee-water mixture level ($Mix_0$). Since Turkish coffee is a type of coffee in which its brewing understood from the foam level, here initial coffee-water mixture level ($Mix_0$) will be always at a smaller value then the target coffee-water mixture level ($Mix_T$).

Coffee-water mixture level ($Mix_I$) has being measured through brewing process with the said at least one capacitive sensor (4). It has also being measured through brewing process whether the coffee water mixture reached the boiling point with at least one capacitive sensor to determine the boiling information ($T_B$). A plurality of coffee water mixture level ($Mix_I$) and a plurality of boiling information ($T_B$) have continuously being transmitted to a microprocessor. Microprocessor determines the suitable resistor power rating coefficient ($\lambda$) according to A plurality of coffee water mixture level ($Mix_I$) and a plurality of boiling information ($T_B$).

In an embodiment of the present invention if coffee water mixture level ($Mix_I$) is not equal to the target coffee-water mixture level ($Mix_T$) and boiling point has been reached according to the boiling information ($T_B$), microprocessor decreases the resistor power rating coefficient ($\lambda$) accordingly and brewing process continues. Thus, a longer brewing process is ensured.

In an embodiment of the present invention if coffee water mixture level ($Mix_I$) is not equal to the target coffee-water mixture level ($Mix_T$) and boiling point has not been reached according to the boiling information ($T_B$), brewing process continues without any alteration in the resistor power rating coefficient ($\lambda$).

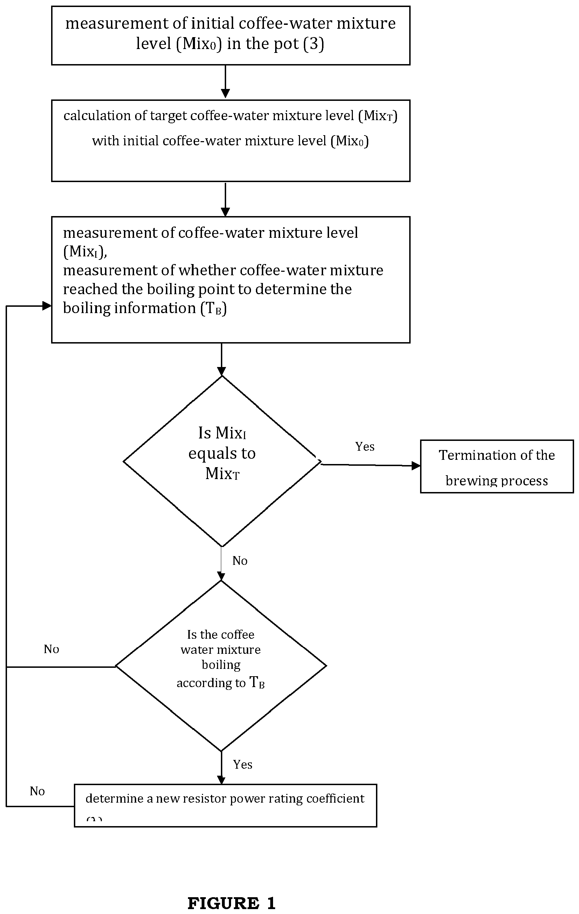

In another embodiment of the present invention if coffee water mixture level ($Mix_I$) is equal to the target coffee-water mixture level ($Mix_T$), the microprocessor terminates brewing process. Said method of the present invention is summarised in flowchart of Figure 1.

In a preferred embodiment of the present invention, after microprocessor terminates the brewing process, it may initiate the brewing process for a second time. So that traditional Turkish coffee brewing method known as double brewing is ensured.

Here the term "resistor power rating coefficient" as used herein means a value that is required for coffee-water mixture to be brewed consistently. Microprocessor enables the coffee to be brewed consistently with the resistor power rating which corresponds to resistor power rating coefficient ($\lambda$). The relation between resistor power rating coefficient ($\lambda$) and resistor power rating can be formulated as follows;

$$\text{Resistor power rating (watt) / coffee water mixture level (ml)} = \text{resistor power rating coefficient } \boldsymbol{\lambda} \text{ (watt/ml)}$$

Another issue to be considered is that the resistor power rating coefficient ($\lambda$) will be applied through the brewing time. The term "brewing time" used herein means the time elapsed to achieve target coffee water mixture level ($Mix_T$) from initial coffee-water mixture level ($Mix_0$).

The resistor power rating coefficient ($\lambda$) determined within the scope of the present invention can be used to brew Turkish coffee in two alternative ways; normal mode and slow mode. Table 1 presents the resistor power rating ranges corresponding to the resistor power rating coefficient ($\lambda$) ranges which are suitable to brew Turkish coffee in normal mode and slow mode. Values of Table 1 had been calculated according to traditional (manually) Turkish coffee brewing methods.

**Table 1** the resistor power rating ranges corresponding to the resistor power rating coefficient ($\lambda$) ranges which are used in normal brewing and slow brewing.

| Resistor power rating coefficient ($\lambda$) (watt/ml) | Normal brewing (watt) | Slow brewing (watt) |
|---|---|---|
| 8-16 | 30-350 | 30-120 |
| 5-8 | 50-700 | 50-250 |
| 0-5 | 70-950 | 70-450 |

Values of Table 1 will be stored in the said microprocessor or a memory unit. Therefore, in a preferred embodiment of the present invention, in the method of the present invention the resistor power rating coefficient ($\lambda$) ranges from 8 watt/ml to 16 watt/ml.

In another preferred embodiment of the present invention, in the method of the present invention the resistor power rating coefficient ($\lambda$) ranges from 5 watt/ml to 8 watt/ml.

In another preferred embodiment of the present invention, in the method of the present invention the resistor power rating coefficient ($\lambda$) ranges from 0 watt/ml to 5 watt/ml.

The resistor power rating ranges corresponding to the resistor power rating coefficient ($\lambda$) ranges are different for normal brewing and slow brewing.

Therefore, in a preferred embodiment of the present invention, when the resistor power rating coefficient ($\lambda$) ranges from 8 watt/ml to 16 watt/ml, the resistor power rating ranges from 30 watt to 350 watt. The resistor power rating more preferably ranges from 30 watt to 120 watt.

In another preferred embodiment of the present invention, when the resistor power rating coefficient ($\lambda$) ranges from 5 watt/ml to 8 watt/ml, the resistor power rating ranges from 50 watt to 700 watt. The resistor power rating more preferably ranges from 50 watt to 250 watt.

In another preferred embodiment of the present invention, when the resistor power rating coefficient ($\lambda$) ranges from 0 watt/ml to 5 watt/ml, the resistor power rating ranges from 70 watt to 950 watt. The resistor power rating more preferably ranges from 70 watt to 450 watt.

In an embodiment of the present invention, water amount that is required to brew Turkish coffee according to value predetermined by the user can be automatically filled to the pot (3). In this embodiment Turkish coffee machine (0); may comprise a water pump, a water flow sensor, a water chamber. In this embodiment if a filled pot (3) placed in the chamber (5), initial coffee-water mixture level ($Mix_0$) measured by at least one capacitive sensor (4). It can be calculated whether the measured initial coffee-water mixture level ($Mix_0$) is suitable for the value predetermined by the user. In case of need, Turkish coffee machine (0) can fill the pot (3) automatically from the water chamber with the help of the water pump. In another embodiment, if a filled pot (3) placed in the chamber, initial coffee-water mixture level ($Mix_0$) measured by at least one capacitive sensor (4) and for example a maximum level which is predetermined value can be compared to the initial coffee-water mixture level ($Mix_0$). If the initial coffee-water mixture level ($Mix_0$) is over the maximum level, the Turkish coffee machine (0) may not initiate the brewing process.

In another embodiment of the present invention, user fill coffee water mixture to the pot (3) manually. Initial coffee water mixture ($Mix_0$) measured by at least one capacitive sensor (4). So that, for example it can be known whether the maximum level is exceeded or not. If the initial coffee-water mixture level ($Mix_0$) is over the maximum level, the Turkish coffee machine (0) may not initiate the brewing process.

In a preferred embodiment of the invention, at least one capacitive sensor which is placed in the machine body (1) and face towards to chamber (5) in the Turkish coffee machine (0), is also placed as facing to the top of the pot (3). In another preferred embodiment of the invention said at least one capacitive sensor (4) is placed as facing to the body of the pot (3).

Turkish coffee machine (0) of the present invention may further comprise a brewing unit (2). Brewing unit (2) can be controlled accorded ding to the data calculated by the microprocessor. Brewing unit (2) is preferably a long life heater. Said brewing unit (2) is preferably is placed in the pot (3) base.

Turkish coffee machine (0) of the present invention may further comprise a connector (6). Said connector (6) is preferably placed in the base of the chamber (5). Connector provides the connection and the energy transmission between the Turkish coffee machine (0) and pot (3).

According to the invention, the Turkish coffee machine further comprises conductive materials which form a faraday cage. Said conductive materials can be composed of wires and plates. Said conductive material is a metal, preferably a copper. Machine body (1), pot (3) or chamber (5) can be covered by conductive material in combination or separately. So that a faraday cage can be formed around the open areas of the capacitive sensor that are susceptible to external parasites. Consequently, the measurement of the said sensor become more sensitive and independent from the external factors.

## Claims

1. A Turkish coffee brewing method in a Turkish coffee machine (0) **wherein** the method comprises the following steps:

i. formation of a Faraday cage, using conductive materials, around a Turkish coffee machine having a capacitive sensor (4)
ii. measurement of initial coffee-water mixture level ($Mix_0$) with the capacitive sensor(4)
iii. calculation of target coffee-water mixture level ($Mix_T$) with initial coffee-water mixture level ($Mix_0$)
iv. continuous measurement of coffee-water mixture level ($Mix_I$) through brewing process with the capacitive sensor (4) and continuous measurement of whether the coffee water mixture reached the boiling point with the capacitive sensor (4) to determine the boiling information ($T_B$).
v. determination of resistor power rating coefficient ($\lambda$) which is a quotient obtained by dividing resistor power rate by the coffee-water mixture level ($Mix_I$) and applying desired resistor power rating coefficient ($\lambda$) based on the coffee-water mixture level ($Mix_I$) and the boiling information ($T_B$).
vi. termination of brewing process when target coffee-water mixture level ($Mix_T$) is measured.

2. A Turkish coffee brewing method according to claim 1 **wherein** resistor power rating coefficient ($\lambda$) ranges from 8 watt/ml to 16 watt/ml.

3. A Turkish coffee brewing method according to claim 1 **wherein** resistor power rating coefficient ($\lambda$) ranges from 5 watt/ml to 8 watt/ml.

4. A Turkish coffee brewing method according to claim 1 **wherein** resistor power rating coefficient ($\lambda$) ranges from 0 watt/ml to 5 watt/ml.

5. A Turkish coffee brewing method according to claim 2 **wherein** resistor power rating ranges from 30 watt to 350 watt.

6. A Turkish coffee brewing method according to claim 5 **wherein** resistor power rating ranges from 30 watt to 120 watt.

7. A Turkish coffee brewing method according to claim 3 **wherein** resistor power rating ranges from 50 watt to 700 watt.

8. A Turkish coffee brewing method according to claim 7 **wherein** resistor power rating ranges from 50 watt to 250 watt.

9. A Turkish coffee brewing method according to claim 4 **wherein** resistor power rating ranges from 70 watt to 950 watt.

10. A Turkish coffee brewing method according to claim 9 **wherein** resistor power rating ranges from 70 watt to 450 watt.

11. A Turkish coffee machine (0) comprising a machine body (1), a chamber (5) constituted in said machine body (1), a pot (3) placed in the chamber (5) wherein the Turkish coffee machine (0) comprises a capacitive sensor (4) placed in the machine body (1) and faced towards to chamber (5) and means adapted to execute the steps of the method of claim 1 **characterized in that** conductive materials are placed on the machine body (1) so that a Faraday cage is formed around the capacitive sensor (4) of the Turkish coffee machine (0).

## Patentansprüche

1. Verfahren zum Brühen von türkischem Kaffee in einer türkischen Kaffeemaschine (0), **wobei** das Verfahren die folgenden Schritte umfasst:

i. Ausbilden eines Faraday'schen Käfigs unter Verwendung von leitfähigen Materialien um eine türkischer-Kaffeemaschine mit einem kapazitiven Sensor (4) herum,
ii. Messen des anfänglichen Kaffee-Wasser-Gemischlevels ($Mix_0$) mit dem kapazitiven Sensor (4),
iii. Berechnen des Ziel-Kaffee-Wasser-Gemischlevels ($Mix_T$) mit dem anfänglichen Kaffee-Wasser-Gemischlevel ($Mix_0$),
iv. kontinuierliches Messen des Kaffee-Wasser-Gemischlevels ($Mix_I$) durch den Brühprozess mit dem kapazitiven Sensor (4) und kontinuierliches Messen, ob das Kaffee-Wasser-Gemisch den Siedepunkt erreicht hat, mit dem kapazitiven Sensor (4), um die Siedeinformation ($T_B$) zu bestimmen.

v. Bestimmen des Widerstandsleistungsbewertungskoeffizienten (1), der ein Quotient ist, der durch Teilen der Widerstandsleistung durch das Kaffee-Wasser-Gemischlevel ($Mix_I$) und Anwenden des gewünschten Widerstandsleistungsbewertungskoeffizienten (1) basierend auf dem Kaffee-Wasser-Gemischlevel ($Mix_I$) und der Siedeinformation ($T_B$) erhalten wird.

vi. Beenden des Brühprozesses, wenn das Ziel-Kaffee-Wasser-Gemischlevel ($Mix_T$) gemessen wird.

**2.** Verfahren zum Brühen von türkischem Kaffee nach Anspruch 1, **wobei** der Widerstandsleistungsbewertungskoeffizient (1) im Bereich von 8 Watt/ml bis 16 Watt/ml liegt.

**3.** Verfahren zum Brühen von türkischem Kaffee nach Anspruch 1, **wobei** der Widerstandsleistungsbewertungskoeffizient ($\lambda$) im Bereich von 5 Watt/ml bis 8 Watt/ml liegt.

**4.** Verfahren zum Brühen von türkischem Kaffee nach Anspruch 1, **wobei** der Widerstandsleistungsbewertungskoeffizient ($\lambda$) im Bereich von 0 Watt/ml bis 5 Watt/ml liegt.

**5.** Verfahren zum Brühen von türkischem Kaffee nach Anspruch 2, **wobei** die Widerstandsleistungsbewertung im Bereich von 30 Watt bis 350 Watt liegt.

**6.** Verfahren zum Brühen von türkischem Kaffee nach Anspruch 5, **wobei** die Widerstandsleistungsbewertung im Bereich von 30 Watt bis 120 Watt liegt.

**7.** Verfahren zum Brühen von türkischem Kaffee nach Anspruch 3, **wobei** die Widerstandsleistungsbewertung im Bereich von 50 Watt bis 700 Watt liegt.

**8.** Verfahren zum Brühen von türkischem Kaffee nach Anspruch 7, **wobei** die Widerstandsleistungsbewertung im Bereich von 50 Watt bis 250 Watt liegt.

**9.** Verfahren zum Brühen von türkischem Kaffee nach Anspruch 4, **wobei** die Widerstandsleistungsbewertung im Bereich von 70 Watt bis 950 Watt liegt.

**10.** Verfahren zum Brühen von türkischem Kaffee nach Anspruch 9, **wobei** die Widerstandsleistungsbewertung im Bereich von 70 Watt bis 450 Watt liegt.

**11.** Maschine für türkischen Kaffee (0), umfassend einen Maschinenkörper (1), eine Kammer (5), die in dem Maschinenkörper (1) gebildet ist, einen Topf (3), der in der Kammer (5) platziert ist, wobei die türkische Kaffeemaschine (0) einen kapazitiven Sensor (4), der in dem Maschinenkörper (1) platziert ist und der Kammer (5) zugewandt ist, und Mittel, die angepasst sind, um die Schritte des Verfahrens nach Anspruch 1 auszuführen, umfasst, **dadurch gekennzeichnet, dass** leitfähige Materialien auf dem Maschinenkörper (1) platziert sind, so dass ein Faraday'scher Käfig um den kapazitiven Sensor (4) der Maschine für türkischen Kaffee (0) herum ausgebildet ist.

**Revendications**

**1.** Procédé d'infusion de café turc dans une machine à café turc (0), dans lequel le procédé comprend les étapes suivantes :

i. formation d'une cage de Faraday, à l'aide de matériaux conducteurs, autour d'une machine à café turc ayant un capteur capacitif (4) ;
ii. mesure d'un niveau initial de mélange café-eau ($Mix_0$) à l'aide du capteur capacitif (4) ;
iii. calcul d'un niveau cible de mélange café-eau ($Mix_T$) avec le niveau initial de mélange café-eau ($Mix_0$) ;
iv. mesure continue de niveau de mélange café-eau ($Mix_i$) pendant un processus d'infusion à l'aide du capteur capacitif (4) et mesure continue de l'atteinte du point d'ébullition par le mélange café-eau à l'aide du capteur capacitif (4) pour déterminer l'information d'ébullition ($T_B$) ;
v. détermination d'un coefficient de puissance nominale de résistance ($\lambda$), qui est un quotient obtenu par division d'une puissance de résistance par le niveau de mélange café-eau ($Mix_i$) et par application du coefficient de puissance nominale de résistance ($\lambda$) souhaité sur la base du niveau de mélange café-eau ($Mix_i$) et de l'infor-

mation d'ébullition ($T_B$) ;

vi. arrêt du processus d'infusion lorsque le niveau cible de mélange café-eau ($Mix_T$) est mesuré.

2. Procédé d'infusion de café turc selon la revendication 1, dans lequel le coefficient de puissance nominale de résistance ($\lambda$) est compris dans la plage allant de 8 watts/ml à 16 watts/ml.

3. Procédé d'infusion de café turc selon la revendication 1, dans lequel le coefficient de puissance nominale de résistance (X) est compris dans la plage allant de 5 watts/ml à 8 watts/ml.

4. Procédé d'infusion de café turc selon la revendication 1, dans lequel le coefficient de puissance nominale de résistance (X) est compris dans la plage allant de 0 watt/ml à 5 watts/ml.

5. Procédé d'infusion de café turc selon la revendication 2, dans lequel la puissance nominale de résistance est comprise dans la plage allant de 30 watts à 350 watts.

6. Procédé d'infusion de café turc selon la revendication 5, dans lequel la puissance nominale de résistance est comprise dans la plage allant de 30 watts à 120 watts.

7. Procédé d'infusion de café turc selon la revendication 3, dans lequel la puissance nominale de résistance est comprise dans la plage allant de 50 watts à 700 watts.

8. Procédé d'infusion de café turc selon la revendication 7, dans lequel la puissance nominale de résistance est comprise dans la plage allant de 50 watts à 250 watts.

9. Procédé d'infusion de café turc selon la revendication 4, dans lequel la puissance nominale de résistance est comprise dans la plage allant de 70 watts à 950 watts.

10. Procédé d'infusion de café turc selon la revendication 9, dans lequel la puissance nominale de résistance est comprise dans la plage allant de 70 watts à 450 watts.

11. Machine à café turc (0) comprenant un corps de machine (1), une chambre (5) constituée dans ledit corps de machine (1), un pot (3) placé dans la chambre (5), la machine à café turc (0) comprenant un capteur capacitif (4) placé dans le corps de machine (1) et orienté vers la chambre (5) et des moyens aptes à exécuter les étapes du procédé selon la revendication 1, **caractérisée par le fait que** des matériaux conducteurs sont placés sur le corps de la machine (1) de telle sorte qu'une cage de Faraday est formée autour du capteur capacitif (4) de la machine à café turc (0).

measurement of initial coffee-water mixture level ($Mix_0$) in the pot (3)

calculation of target coffee-water mixture level ($Mix_T$) with initial coffee-water mixture level ($Mix_0$)

measurement of coffee-water mixture level ($Mix_I$),
measurement of whether coffee-water mixture reached the boiling point to determine the boiling information ($T_B$)

Is $Mix_I$ equals to $Mix_T$

Yes

Termination of the brewing process

No

Is the coffee water mixture boiling according to $T_B$

No

No

Yes

determine a new resistor power rating coefficient
(?)

**FIGURE 1**

**FIGURE 2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- TR 200904257
- TR 201615850 A2
- EP 2700338 A1